# EUROPEAN PATENT APPLICATION

(11) **EP 4 787 689 A1**
(43) Date of publication of application: **05.08.2026**
(21) Application number: 24871581.5
(22) Date of filing: 20.08.2024
(51) Int. Cl.: H02K 35/00, B23Q 3/06, F15B 15/28

(54) **AUTONOMOUS POWER GENERATION DEVICE AND CYLINDER DEVICE USING SAME**

(30) Priority: 27.09.2023 JP 2023166280; 12.01.2024 JP 2024003414
(71) Applicant: Kosmek Ltd., Kobe-shi, Hyogo 651-2241 (JP)
(72) Inventor: KOJIMA, Ryota, Kobe City, Hyogo 651-2241 (JP)
(74) Representative: Kramer Barske Schmidtchen Patentanwälte PartG mbB
(86) International application number: PCT/JP2024/029416
(87) International publication number: WO 2025/069779

(57) **Abstract**

Provided are: an autonomous power generation device in which the mutual positional relationship between a magnetic circuit and a permanent magnet is changed by linear motion and a magnetic circuit in which the direction of magnetic flux has been changed is formed instantaneously; and a cylinder device using the autonomous power generation device. In a coil unit (12), a coil (19) is wound around the outer periphery of a core body (17b), and sliding surfaces (17d, 17e) having a predetermined dimension (d) are provided on the front and rear of the coil (19), with contact terminals (21, 22) respectively located thereon. In a magnet unit (13), a permanent magnet (14) is sandwiched from above and below by U-shaped magnetic flux paths (15, 16) having pole pieces (15a, 16a) that face each other to form a pair and pole pieces (15b, 16b) that face each other to form a pair, the pairs being disposed on front and rear sides of the coil (19). During the process of the core body (17b) moving from a first position to a second position, the two contact terminals (21, 22) move along the sliding surfaces (17d, 17e) by means of magnetic forces from the pole pieces (15a, 16a, 15b, 16b).

## Description

### FIELD OF THE INVENTION

The present invention relates to an autonomous power generation device that uses mechanical fluctuations to fluctuate magnetic flux passing through an induction coil and converts it into electrical energy, and to a cylinder device that uses the same to detect the position of a piston.

Cylinder devices are used in a variety of applications, such as clamp devices and pressure detection devices. For example, in clamp devices, a piston is operated to fix a clamped object, such as a workpiece, mold, or tool, to a table or robot hand. Release and lock operations are performed based on the position of the piston. A clamping failure occurs when the piston is not positioned between the release and lock positions. Cylinder devices are equipped with a mechanism configured to detect the positions of the pistons as operating states. For example, a cylinder device disclosed in Patent Document 1 has a passage that is closed or opened depending on the position of the piston, and compressed air is supplied to the passage to detect the position of the piston based on the flow state of the air. Patent Document 2, for example, discloses a technology in which a coil and a magnet are installed inside the cylinder device, and the overlap distance between the coil and the magnet is changed depending on the moving position of the piston, thereby detecting the operating state of the cylinder device as a change in coil inductance.

Cylinder devices that use compressed air to detect their operating state require the installation of a compressed air source, the routing of the compressed air, and an environment for supplying power to the compressed air source. Also, in technology that uses changes in inductance to detect the operating state, it is necessary to prepare an environment for supplying power to the cylinder device so that current can be supplied to the coil.

As a device that generates current independently and transmits mechanical fluctuations to the outside without a power source or connection to external electrical wiring, autonomous power generation devices such as those exemplified in Patent Documents 3 to 5 are known. As shown in each of these patent documents, a very small wireless radio is placed nearby the autonomous power generation device. The autonomous power generation device cooperates with the wireless radio to supply power generated by mechanical fluctuations, and the wireless radio then wirelessly transmits the occurrence of the mechanical fluctuations.

According to the technologies disclosed in Patent Documents 3 and 4, a magnetic circuit that passes through a central opening of an excitation coil is disclosed, wherein an upper movable piece and a lower movable piece are respectively connected to upper and lower poles of a permanent magnet, the ends of the magnetic circuit are disposed between the upper and lower movable pieces, and the direction of magnetic flux in the magnetic circuit is varied by swaying the upper and lower movable pieces such that, in a first extreme position, one end of the magnetic circuit contacts the upper movable piece and the other end contacts the lower movable piece, and in a second extreme position, the other end of the magnetic circuit contacts the upper movable piece and the one end contacts the lower movable piece. The electrical energy generated by the excitation coil operates a wireless module for wireless transmission. According to the technology of Patent Document 5, a magnetically conductive plate is attached to each pole of a permanent magnet, the iron core of a coil is positioned to face one of the magnetically conductive plates, and the magnetically conductive plates facing the iron core of the coil are switched up and down between the south pole and north pole plates, thereby changing the direction of the magnetic flux of the iron core.

Unlike rotary generators, which generate electricity when continuous rotational motion is applied as a mechanical fluctuation, the autonomous power generation devices are devices that capture momentary and intermittent mechanical fluctuations and generate electricity instantaneously. Because the amount of power generated by the autonomous power generation devices are devices depends on changes in magnetic flux, the technologies in each patent document use an elastic body to further accelerate the rate of change of external mechanical fluctuations and increase the amount of change in magnetic flux.

As an inventive feature, the technologies disclosed in Patent Documents 3 and 4 accelerate mechanical fluctuations by temporarily storing external mechanical variations in an elastic member and then releasing them all at once. For example, Patent Document 3 utilizes a leaf spring as such an elastic member, Patent Document 4 employs a spring element, and Patent Document 5 uses an elastic piece.

### PRIOR ART

### PATENT DOCUMENT

Patent Document 1: Japanese Patent No. 7246686
Patent Document 2: Japanese Patent No. 7366386
Patent Document 3: Japanese Translation of PCT International Application Publication No. 2009-516802
Patent Document 4: Japanese Translation of PCT International Application Publication No. 2022-552337
Patent Document 5: Patent Japanese Patent Laid Open Publication No. 2018-153094

### DISCLOSURE OF THE INVENTION

### PROBLEMS TO BE SOLVED BY THE INVENTION

In the technologies of the autonomous power generation devices disclosed in Patent Documents 3 and 4, the magnetic circuit and the permanent magnet change their positional relationship in response to external mechanical fluctuations by swaying about a predetermined rotational axis.

In addition, the autonomous power generation device disclosed in Patent Document 5 is configured such that two chute panels face each other, each having a chute extending vertically along its surface, and a permanent magnet is moved linearly up and down along the chute, thereby changing the positional relationship between the magnetic circuit and the permanent magnet in response to external mechanical fluctuations. However, in this technology, the magnetic circuit including the permanent magnet does not form a closed loop via a magnetic plate, resulting in a low magnetic flux density passing through the magnetic plate.

Furthermore, in the technologies of the autonomous power generation devices disclosed in Patent Documents 3 to 5, either the entire magnetic circuit side or the entire permanent magnet side is moved. Due to the large mass being moved, there is a limit to how much the acceleration of mechanical fluctuations can be increased, even when using the elastic force stored in an elastic member, and thus the resulting electromotive force is insufficient. Moreover, these technologies are intended to be used as switches operated by natural persons. The cylinder device includes a piston and a shaft member. The shaft member performs vertical motion, and such motion cannot actuate conventional autonomous power generation devices.

In the cylinder device, as in a clamp device, it is necessary to detect various positions of the shaft member, such as the release position, the lock position, and positions that may be regarded as clamp failure. However, within the constrained dimensions of the cylinder device, it is difficult to install an autonomous power generation device at each of these positions.

A first object of the present invention is to provide an autonomous power generation device in which linear motion changes the positional relationship between a magnetic circuit and a permanent magnet, and a magnetic circuit with a changed magnetic flux direction is instantaneously formed.

A second object of the present invention is to provide an autonomous power generation device that generates power directly by utilizing linear motion from an external source.

A third object of the present invention is to provide a cylinder device capable of detecting the position of a piston by using an autonomous power generation device, without the need to install a compressed air source, route compressed air, or establish a power supply environment for the compressed air source or coils.

### MEANS TO SOLVE THE PROBLEM

The autonomous power generation device of the present invention comprises:
a coil unit in which a coil is wound around the outer periphery of a core having a core axis direction as its longitudinal direction, the coil unit including contact terminals respectively provided on the front and rear sides of the outer periphery of the core across the coil; and
a magnet unit comprising magnetic flux paths formed of soft magnetic materials, each having a U-shaped configuration in a side view with respect to the upper and lower magnetic poles of a permanent magnet, wherein the magnetic flux paths are disposed with the permanent magnet interposed therebetween, such that one of the magnetic flux paths is positioned on the inner side and the other on the outer side, overlapping at a spacing from each other, and pole pieces at both ends of the magnetic flux paths are arranged to face each other in pairs, the pairs being disposed on the front and rear sides of the coil;
wherein the pair of front-side pole pieces are arranged to sandwich the front-side contact terminal in the core axis direction, and the pair of rear-side pole pieces are arranged to sandwich the rear-side contact terminal in the core axis direction;
when the core is in a first position on the front side, the front-side contact terminal is in contact with the front one of the pair of front-side pole pieces, and the rear-side contact terminal is in contact with the front one of the pair of rear-side pole pieces; when the core is in a second position on the rear side, the front-side contact terminal is in contact with the rear one of the pair of front-side pole pieces, and the rear-side contact terminal is in contact with the rear one of the pair of rear-side pole pieces; and
a probe portion of the core protruding from an opening overlaps with a displacement portion, whereby vertical movement of a piston portion is converted into movement in the core axis direction.

Furthermore, an autonomous power generation device of the present invention comprises:
a coil unit in which a coil is wound around the outer periphery of a core body having a core axis direction as its longitudinal direction, the coil unit including sliding surfaces provided on the front and rear outer peripheries of the core body across the coil, each sliding surface having a predetermined length in the core axis direction, and front and rear slide pieces that respectively slide along the front and rear sliding surfaces; and
a magnet unit comprising magnetic flux paths formed of soft magnetic materials, each having a U-shaped configuration in a side view with respect to the upper and lower magnetic poles of a permanent magnet, wherein the magnetic flux paths are disposed with the permanent magnet interposed therebetween, such that one of the magnetic flux paths is positioned on the inner side and the other on the outer side, overlapping at a distance from each other, and pole pieces at both ends of the magnetic flux paths are arranged to face each other in pairs, the pairs being disposed on the front and rear sides of the coil;
wherein the pair of front-side pole pieces are arranged to sandwich the front-side slide piece in the core axis direction, and the pair of rear-side pole pieces are arranged to sandwich the rear-side slide piece in the core axis direction;
when the core body is in a first position on the front side, the front-side slide piece is in contact with the front one of the pair of front-side pole pieces, and the rear-side slide piece is in contact with the front one of the pair of rear-side pole pieces;
when the core body is in a second position on the rear side, the front-side slide piece is in contact with the rear one of the pair of front-side pole pieces, and the rear-side slide piece is in contact with the rear one of the pair of rear-side pole pieces; and
during movement of the core body from the first position to the second position, the two slide pieces move along the sliding surfaces by magnetic force from the pole pieces.

The cylinder device of the present invention comprises a shaft member that moves vertically along a centerline C by means of pressure oil or compressed air, wherein the vertical movement of the shaft member is converted into motion in a core axis direction c1, which is radial with respect to the centerline C, to actuate the autonomous power generation device; a displacement portion having a shape such as a taper, hole, recess, or groove, the radial distance from the centerline C varying according to the shape of the displacement portion, which is moved in response to the movement of the shaft member; and the displacement portion is arranged to face the probe portion of the autonomous power generation device such that, when the displacement portion comes into opposition with the probe portion, motion in the core axis direction c1 of the core is generated.

### EFFECTS OF INVENTION

According to the autonomous power generation device of the present invention, an autonomous power generation device that directly utilizes linear motion can be provided. Further, according to the autonomous power generation device of the present invention, an autonomous power generation device having a high response speed and capable of generating a large electromotive force by increasing the variation in magnetic flux passing through the coil in the magnetic circuit can be provided.

According to the cylinder device of the present invention, the vertical movement of a shaft body is converted into movement that displaces the core body in the core axis direction c1. Contact terminals are provided at the front and rear of the core body, and by the linear movement causing each contact terminal to switch contact from one side to the other between the ends of U-shaped magnetic flux paths that are overlapped with a spacing, the direction of magnetic flux passing through the center of the coil in the coil unit can be reversed without magnetic flux leakage.

### BRIEF DESCRIPTION OF THE DRAWINGS

FIG. 1 is a diagram for explaining the autonomous power generation device, wherein FIGS. 1A and 1B illustrate different views thereof.
FIG. 2 is a diagram for explaining components of the autonomous power generation device.
FIG. 3 is another diagram for explaining components of the autonomous power generation device.
FIG. 4 is a diagram for explaining the operation of the autonomous power generation device, wherein FIGS. 4A, 4B, 4C, and 4D illustrate different operational states.
FIG. 5 is a diagram for explaining the effects of the autonomous power generation device, wherein FIGS. 5A, 5B, and 5C illustrate different conditions.
FIG. 6 is a diagram for explaining a cylinder device according to a first embodiment, wherein FIGS. 6A and 6B illustrate different views thereof.
FIG. 7 is a diagram for explaining a cylinder device according to a second embodiment in a release state.
FIG. 8 is a diagram for explaining a cylinder device according to the second embodiment in an intermediate state.
FIG. 9 is a diagram for explaining a cylinder device according to the second embodiment in a locked state.
FIG. 10 is a diagram for explaining a cylinder device according to a third embodiment, wherein FIGS. 10A and 10B illustrate different views thereof.
FIG. 11 is a diagram for explaining a cylinder device according to a fourth embodiment, wherein FIGS. 11A and 11B illustrate different views thereof.
FIG. 12 is a diagram for explaining the cylinder device of the fourth embodiment in a slip state.
FIG. 13 is a diagram for explaining a cylinder device according to a fifth embodiment in a release state.
FIG. 14 is a diagram for explaining the cylinder device of the fifth embodiment in a locked state, wherein FIGS. 14A and 14B illustrate different views thereof.
FIG. 15 is a diagram for explaining a cylinder device according to a sixth embodiment in a release state, wherein FIGS. 15A and 15B illustrate different views thereof.
FIG. 16 is a diagram for explaining the cylinder device of the sixth embodiment in a locked state, wherein FIGS. 16A and 16B illustrate different views thereof.
FIG. 17 is a diagram for explaining a cylinder device according to a seventh embodiment, wherein FIGS. 17A, 17B, 17C, and 17D illustrate different views thereof.

### PREFERRED EMBODIMENT OF THE INVENTION

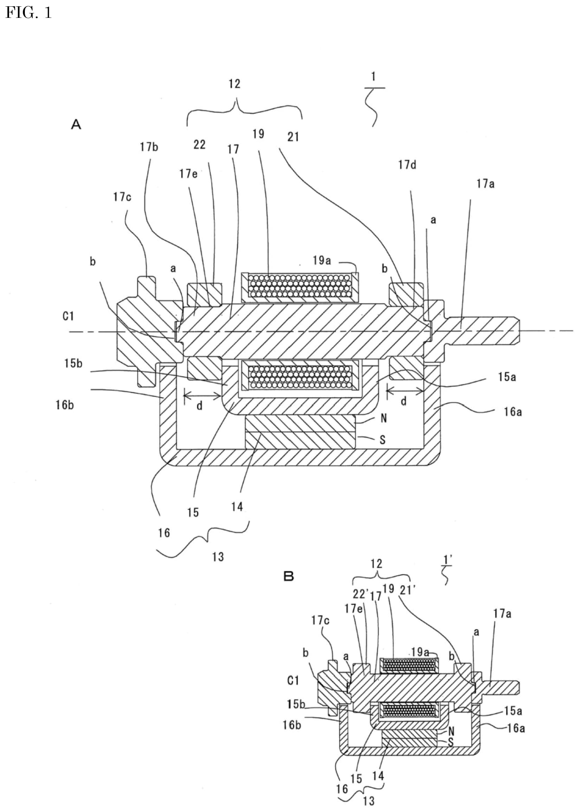

First, the autonomous power generation device will be described. As shown in FIG. 1A, an autonomous power generation device 1 includes a magnet unit 13 fixed to a housing 2 by bolts 23, and a coil unit 12 that is movable in a core axis direction c1 by means of a probe portion 11 composed of a ball. The magnet unit 13 includes a permanent magnet 14 and magnetic flux paths 15 and 16 formed of soft magnetic material, respectively positioned above and below the permanent magnet. Magnetic flux paths made of soft magnetic material are provided on the upper and lower magnetic poles of the permanent magnet 14. The two magnetic flux paths 15 and 16 are arranged to sandwich the permanent magnet 14 and have a U-shaped configuration in side view, wherein one magnetic flux path 15 is disposed on the inner side and the other magnetic flux path 16 is disposed on the outer side, with a spacing therebetween such that they overlap. The respective end portions of the magnetic flux path 15 form pole pieces 15a and 15b, and the respective end portions of the magnetic flux path 16 form pole pieces 16a and 16b.

The coil unit 12 includes a core 17, a coil 19 wound around the outer periphery of the core 17 via a bobbin 19a, and ring-shaped contact terminals 21 and 22 disposed on opposite sides of the coil 19. The pole pieces 15a and 16a are arranged as a pair facing each other on the front side of the coil 19, while the pole pieces 15b and 16b are arranged as a pair facing each other on the rear side of the coil 19. The core 17 comprises a front end portion 17a located on the front side (right in the figure) in the core axis direction c1, a central core body 17b, and a rear end portion 17c located on the rear side (left in the figure), and has a cylindrical shape with the core axis direction c1 aligned with the radial direction of the centerline C. Hereinafter, the right side in the core axis direction c1 is referred to as the front side, and the left side as the rear side. The length of the core 17 in the core axis direction c1 is primarily occupied by the core body 17b, and the coil 19 is wound around the outer periphery of the core body 17b. Although not clearly shown in the drawings, the bobbin 19a is adhesively fixed to the magnetic flux path 15. The core body 17b and the coil 19 are not fixed to each other, and the core body 17b is capable of moving in the core axis direction c1 through the hollow portion of the bobbin 19a, which constitutes the center of the coil 19.

The core body 17b is made of a soft magnetic material. The front end portion 17a and the rear end portion 17c may be made of either a soft magnetic material or a non-magnetic material. However, when these portions are made of a soft magnetic material, it is necessary to provide a spacing so as to avoid magnetic short-circuiting with the upper and lower magnetic flux paths 15 and 16.

Between the core body 17b and the front end portion 17a, and between the core body 17b and the rear end portion 17c, projections a and recesses b are provided so as to allow mutual fitting engagement. On the outer peripheral surfaces between the core body 17b and the front end portion 17a, and between the core body 17b and the rear end portion 17c, sliding surfaces 17d and 17e are formed with reduced diameters relative to other outer peripheral portions, over a distance d. The contact terminals 21 and 22 are made of a soft magnetic material and are fitted around the outer peripheries of the sliding surfaces 17d and 17e, respectively. The contact terminals 21 and 22 are capable of freely moving along the sliding surfaces 17d and 17e in the core axis direction c1 within the range defined by the distance d. Movement of the contact terminals 21 and 22 beyond the distance d is restricted by the larger-diameter portions of the core body 17b and the front and rear end portions 17a and 17c. The two contact terminals 21 and 22 remain in continuous contact with the corresponding sliding surfaces 17d and 17e, and magnetic flux passes between the core body 17b and the contact terminals 21 and 22 without any magnetic gap.

The front end portion 17a of the core 17 is in contact with the probe portion 11, and when radial motion from the centerline C is transmitted from the probe portion 11 to the core 17, the rear end portion 17c of the core 17 moves in the core axis direction c1 relative to the magnet unit 13.

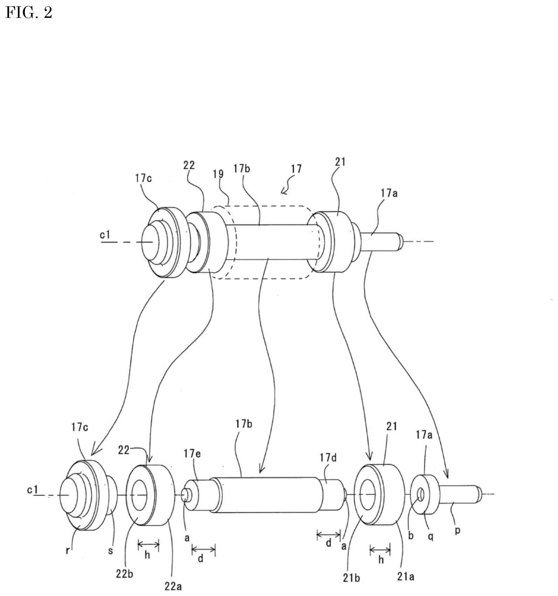

FIG. 2 is a diagram illustrating the details of the coil unit 12 and the contact terminals 21 and 22, with these components removed for explanation. In the figure, the coil 19 (and the bobbin 19a) is indicated by broken lines. When the front end portion 17a and the rear end portion 17c of the core 17 are detached from the core body 17b, the contact terminals 21 and 22 can be removed from the sliding surfaces 17d and 17e. The front end portion 17a includes an input end p that comes into contact with the probe portion 11, a first base portion q having a larger diameter than the sliding surface 17d, and a recess b that engages with a projection a of the core body 17b. The rear end portion 17c includes a pedestal portion r that comes into contact with an elastic member 18, a second base portion s having a larger diameter than the sliding surface 17e, and a recess b that engages with a projection a of the core body 17b. The contact terminals 21 and 22 are cylindrical in shape with a height h, and the height h is shorter than the distance d. Each of the contact terminals 21 and 22 has, on front and rear surfaces thereof, contact surfaces 21a, 21b and contact surfaces 22a, 22b, respectively, which are perpendicular to the core axial direction c1.

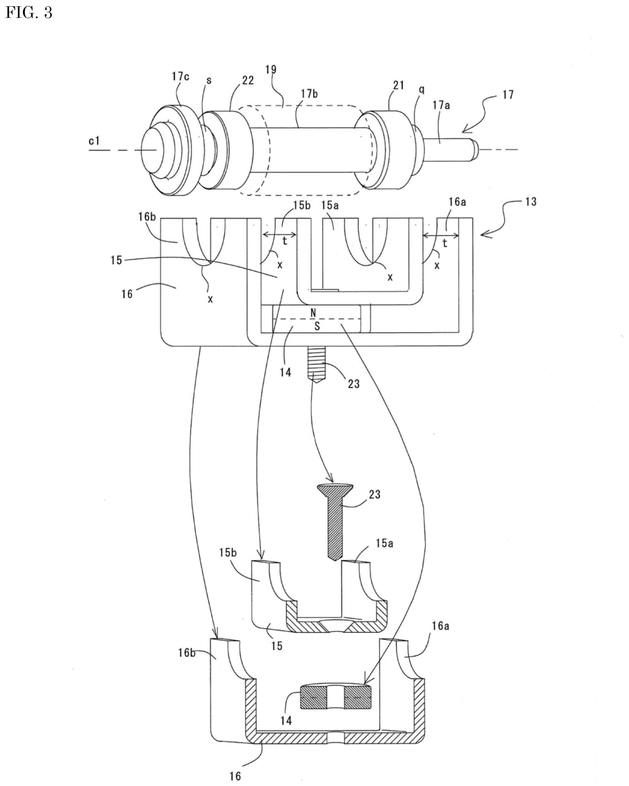

FIG. 3 is a diagram illustrating the relationship between the magnet unit 13 and the core 17. The magnet unit 13 is fixed to the housing 2 by bolts 23, with the permanent magnet 14 sandwiched between the upper and lower magnetic flux paths 15 and 16. The upper and lower magnetic flux paths 15 and 16 are formed by bending plate materials into a U-shaped configuration. The pole pieces 15a, 15b, 16a, and 16b, which are end portions of the respective upper and lower magnetic flux paths 15 and 16, are arranged with a spacing from the core body 17b, the front end portion 17a, and the rear end portion 17c. This is to prevent the formation of a magnetic flux path due to contact between the core body 17b, the front end portion 17a, and the rear end portion 17c and the probe portion 11 or the elastic body 18, either before, after, or during movement caused by being pressed by the probe portion 11 or the elastic body 18.

Magnetic poles of the permanent magnet 14 are exposed at the pole pieces 15a and 16b of the upper and lower magnetic flux paths 15 and 16. The pole pieces 15a and 15b of the upper magnetic flux path 15 and the pole pieces 16a and 16b of the lower magnetic flux path 16 are arranged in parallel with a spacing t therebetween. The front and rear contact surfaces 21b and 21a of the contact terminal 21 are respectively capable of contacting the pole pieces 15a and 16a. The front and rear contact surfaces 22a and 22b of the contact terminal 22 are respectively capable of contacting the pole pieces 15b and 16b. To increase the contact area with the contact terminals 21 and 22, arc-shaped notches x are provided in the pole pieces 15a, 15b, 16a, and 16b. When the contact terminals 21 and 22 slide along the sliding surfaces 17d and 17e, they come into contact with the pole pieces 15a, 15b, 16a, and 16b, thereby restricting further sliding. Accordingly, the movable range of the contact terminals 21 and 22 is defined by the spacing t.

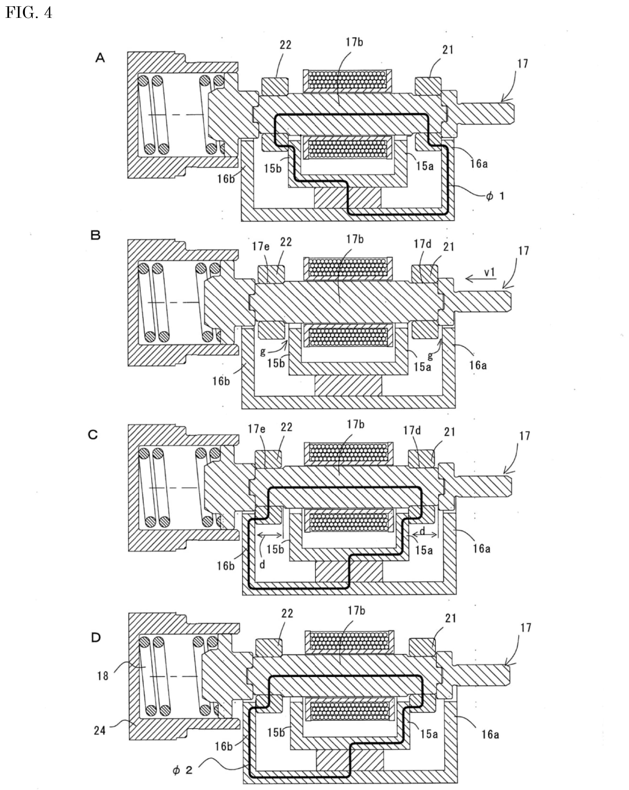

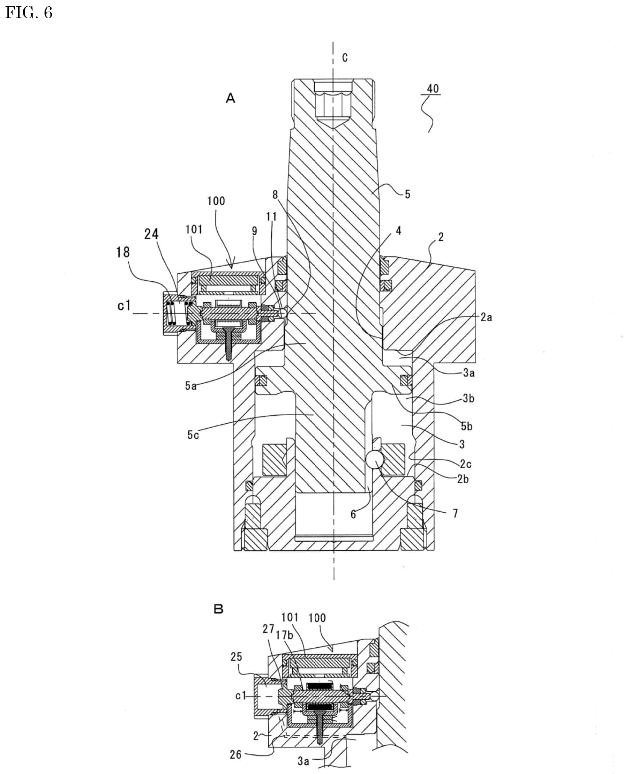

FIGS. 4A to 4D illustrate the operation of the autonomous power generation device 1. The rear end portion 17c of the core 17 of the autonomous power generation device 1 is in contact with an elastic member 18, which is a compression spring, and the elastic member 18 is accommodated within a spring chamber 24. When the core 17 moves rearward in the core axis direction c1, the elastic member 18 accumulates elastic force, and the elastic force stored therein is utilized as a force to urge the core 17 forward. It should be noted that the mechanism for urging the core 17 forward is not limited to the elastic member 18; alternatively, as will be described later with reference to FIG. 6B, a mechanism may be employed in which pressure oil or compressed air is supplied to an operation chamber to apply forward pressure.

Returning to the description of the operation of the autonomous power generation device 1, in FIG. 4A, the rear-side pole piece 15b of the upper magnetic flux path 15, the contact terminal 22, the core body 17b, the contact terminal 21, and the front-side pole piece 16a of the lower magnetic flux path 16 are magnetically short-circuited, thereby forming a magnetic circuit φ1. The magnetic circuit φ1 constitutes a closed-loop path without magnetic leakage.

FIG. 4B illustrates a state in which the core 17 is moving rearward in the core axis direction c1. The contact terminals 21 and 22 are respectively pressed by the front end portion 17a and the larger-diameter portion of the core body 17b, causing the rear-side pole piece 15b of the upper magnetic flux path 15 and the contact terminal 22, as well as the contact terminal 21 and the front-side pole piece 16a of the lower magnetic flux path 16, to begin separating, thereby forming a gap g. At this stage, the movement speed v1 of the core 17 and the contact terminals 21 and 22 corresponds to the movement speed of the probe portion 11. The magnetic force between the rear-side pole piece 15b of the upper magnetic flux path 15 and the contact terminal 22, and the magnetic force between the contact terminal 21 and the front-side pole piece 16a of the lower magnetic flux path 16, gradually decreases.

In FIG. 4C, at the moment when the magnetic force between the rear-side pole piece 16b of the lower magnetic flux path 16 and the contact terminal 22, and the magnetic force between the contact terminal 21 and the front-side pole piece 15a of the upper magnetic flux path 15 become dominant, the contact terminals 21 and 22 disengage from the movement state at speed v1 and are accelerated along the sliding surfaces 17d and 17e, respectively, until they collide with the pole piece 15a and the pole piece 16b. It should be noted that FIGS. 4B and 4C illustrate the states immediately before and after the contact terminals 21 and 22 are rapidly accelerated and displaced, despite the core 17 having moved very little.

As clearly shown in FIG. 4C, the distances d of the sliding surfaces 17d and 17e are designed such that their rear ends extend to the positions of the rear-side pole piece 16b of the lower magnetic flux path 16 and the front-side pole piece 15a of the upper magnetic flux path 15, respectively, or beyond. In this state, the front-side pole piece 15a of the upper magnetic flux path 15, the contact terminal 21, the core body 17b, the contact terminal 22, and the rear-side pole piece 16b of the lower magnetic flux path 16 are magnetically short-circuited to form a magnetic circuit φ2. The magnetic circuit φ2 also constitutes a closed-loop path without magnetic leakage. Focusing on the core body 17b, the direction of magnetic flux passing through the core body 17b is reversed between magnetic circuit φ1 and magnetic circuit φ2. Because the transition from magnetic circuit φ1 to magnetic circuit φ2 occurs instantaneously, the resulting change in magnetic flux is substantial.

Thereafter, the core 17 continues to move until the ball 11 climbs over the tapered portion 8 (FIG. 4D). When the ball 11 descends the tapered portion 8, the reverse sequence from FIG. 4D to FIG. 4A is executed. At this time, the components that push the slide pieces 22 and 21 forward are the rear end portion 17c and the larger-diameter portion of the core body 17b, respectively. Since the movement required to reverse the magnetic flux in the core body 17b is identical, further explanation is omitted.

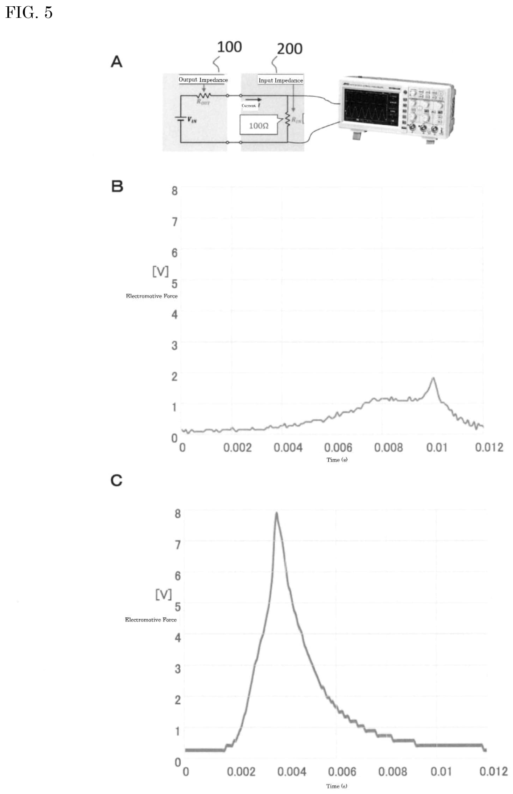

FIGS. 5A to 5C are explanatory diagrams relating to the performance evaluation of the autonomous power generation device 1. FIG. 5A illustrates a test circuit 200 used for evaluation. FIG. 5B shows the results of measuring the electromotive force generated by the autonomous power generation device 1' (see FIG. 1B), which employs contact terminals 21' and 22'. The contact terminals 21' and 22' are components that replace the contact terminals 21 and 22 of the autonomous power generation device 1, and differ only in that they are fixed to the core body 17b, unlike the movable contact terminals 21 and 22. All other configurations are identical to those of the autonomous power generation device 1. In the autonomous power generation device 1', the contact terminals 21' and 22' cannot move independently from the core body. FIG. 5C shows the results of measuring the electromotive force generated by the autonomous power generation device 1, in which the contact terminals are capable of moving independently from the core body.

As shown in FIG. 5B, the peak of the electromotive force in the autonomous power generation device 1' occurs around 10 msec (0.01 seconds), whereas in the autonomous power generation device 1, as shown in FIG. 5C, the peak occurs around 4 msec (0.004 seconds), indicating that the response speed of the autonomous power generation device 1 is faster, as observed in the measurement results of FIG. 5C. Furthermore, it can be observed that the electromotive force has increased from approximately 2 V to approximately 8 V.

In the autonomous power generation device 1' shown in FIG. 5B, the core 17 is also subject to an attracting force from the pole pieces 15a and 16b due to magnetic force; however, the overall mass of the core is relatively large, and it is presumed that the core cannot be significantly accelerated from the movement speed of the probe portion 11, resulting in a slower response speed. In contrast, in the autonomous power generation device 1 shown in FIG. 5C, the mass of the contact terminals 21 and 22 that move along the sliding surfaces 17d and 17e is significantly smaller compared to the entire core 17, and the resulting higher acceleration of the contact terminals 21 and 22 leads to a greater change in magnetic flux passing through the coil 19 (i.e., through the core body 17b), thereby increasing the electromotive force. Additionally, the contact terminals 21 and 22 are not affected by the forward elastic force in the core axis direction c1 from the elastic member 18, which is also considered to contribute to the increased acceleration.

As described above, in the autonomous power generation device 1, the linear motion generated by the probe portion 11 can be directly utilized for the movement of the core body 17b. In addition, the mass of the contact terminals 21 and 22 is significantly smaller than that of the core 17, allowing for greater acceleration and faster response speed. By increasing the response speed, the change in magnetic flux passing through the coil 19 becomes greater, resulting in an increased electromotive force. Furthermore, by employing two movable contact terminals 21 and 22 to form closed-loop magnetic circuits φ1 and φ2, the magnetic flux passing through the coil 19 can be increased. On the other hand, although the autonomous power generation device 1' cannot increase the magnetic flux as much as the autonomous power generation device 1, the entire core forms a closed loop, thereby reducing magnetic flux leakage generated by linear motion and allowing the flux to pass through the coil 19 more effectively.

### [Overview of Cylinder Device]

The cylinder device described below includes a shaft member that moves vertically along the centerline C by means of pressure oil, compressed air, or the like. The vertical movement of the shaft member is converted into movement in the core axis direction c1, which is radial with respect to the centerline C, to operate the autonomous power generation device. A displacement section is provided in a shape such as a taper, hole, or groove, wherein the radial distance from the centerline C varies. This displacement section is configured to move in response to the movement of the shaft member. When the displacement section faces the probe portion of the autonomous power generation device, movement of the core in the core axis direction c1 is induced.

In the cylinder device, spatial constraints exist, and the autonomous power generation device cannot be installed at just any position within the vertical stroke range of the shaft member. The installation location must be above the stroke range of the piston portion of the shaft member, and only one unit can be installed in such a configuration. The manner in which the displacement section responds to the movement of the shaft member varies depending on the specific event, such as a locked state, released state, clamping failure, or slip condition. The cylinder devices can be classified into the following configurations. It should be noted that multiple autonomous power generation devices may be installed in each cylinder device. Furthermore, instead of installing the autonomous power generation device on the flange portion, it may alternatively be installed in other locations such as within the lower wall of a cylinder device having an increased height dimension.

### (1) Configuration in which the displacement section and the shaft member move integrally:

This category includes the first embodiment cylinder device 40, the third embodiment cylinder device 60, and the fourth embodiment cylinder device 70, as described below. In the cylinder devices 40 and 60, the displacement section is provided directly on the shaft member itself. In the cylinder device 70, although the displacement section is not formed on the shaft member itself, it is provided on a sleeve that surrounds the shaft member and operates in substantially integral movement with the shaft member during its downward movement.

### (2) Configuration in which a sleeve is provided to surround and move vertically along the shaft member, and the displacement section is formed on the sleeve:

This category includes the second embodiment cylinder device 50 and the fifth embodiment cylinder device 80, as described below. In these configurations, the displacement section is provided on the sleeve. Within the vertical movement range of the shaft member, a predetermined first range is defined in which the movement of the sleeve and the shaft member is interlocked. In the cylinder device 50, a stepped portion is formed on the shaft member, and within the first range, the sleeve engages with the stepped portion and descends accordingly. The sleeve then ascends due to the elastic force stored in the elastic member during the descent. In the cylinder device 80, two stepped portions are provided on the shaft member-one at an upper position and one at a lower position. When the shaft member descends, the sleeve engages with the upper stepped portion within the first range and descends together. When the shaft member ascends, the sleeve engages with the lower stepped portion within a second range and ascends accordingly.

### 3) Configuration in which a sleeve is provided to surround the shaft member and sway about the centerline C, with one or more displacement sections formed on the sleeve:

This category includes the sixth embodiment cylinder device 90 and the seventh embodiment cylinder device 110, as described below. A mechanism is provided to convert the vertical movement of the shaft member into rotational movement, thereby causing the sleeve to sway. The sleeve is configured to rotate such that its rotational position corresponds to the vertical position of the shaft member and faces the probe portion. Accordingly, one or more displacement sections are provided on the sleeve, allowing the timing for operating the autonomous power generation device to be set once or multiple times.

### [The First Embodiment: Cylinder Device 40]

FIG. 6A is a cross-sectional view of a cylinder device 40 equipped with the autonomous power generation device 1. The cylinder device 40 includes a shaft member 5 that performs vertical movement. The autonomous power generation device 1, together with a wireless module 101, is installed within the cylinder device 40.

The shaft member 5 includes, in order from the top, a shaft body 5a, a piston portion 5b having a larger diameter than the shaft body 5a, and a lower shaft 5c located further below. In the cylinder device 40, pressure oil, compressed air, or the like is supplied to a cylinder hole 3 formed in the housing 2, thereby causing the piston portion 5b to move vertically. The cylinder hole 3 is a space defined by a ceiling portion 2a, a bottom portion 2b, and a cylindrical wall 2c extending in the vertical direction, and is formed on the inner side of the cylindrical wall 2c. When pressure oil or compressed air is supplied to the upper chamber 3a located above the piston portion 5b, the piston portion 5b descends. Conversely, when pressure oil or compressed air is supplied to the lower chamber 3b located below the piston portion 5b, the piston portion 5b ascends.

A cylindrical hole 4 formed in the ceiling portion 2a of the housing 2 surrounds the shaft body 5a, and a portion of the shaft member 5 penetrates the ceiling portion 2a and protrudes outside the housing 2. The shaft member 5 is capable of rotating about the centerline C and moving in the vertical direction (i.e., along the centerline C). A guide groove 6 is provided on the outer wall of the lower shaft 5c. The guide groove 6 includes, in order from the lower side, a helical groove 6a and a linear groove 6b. A ball 7 is inserted into the guide groove 6. Accordingly, when the shaft member 5 moves vertically, the ball 7 is guided along the helical groove 6a, causing the shaft member 5 to rotate while moving vertically. Alternatively, when guided along the linear groove 6b, the ball 7 allows the shaft member 5 to move linearly in the vertical direction.

A tapered displacement section 8 is provided at an intermediate height of the shaft body 5a. Meanwhile, an opening 9 is formed in the peripheral wall surface of the cylindrical hole 4, perpendicular to the centerline C. The position of the opening 9 is within the range through which the displacement section 8 moves as the shaft body 5a undergoes vertical movement. A probe portion 11, configured as a ball, is fitted into and protrudes from the opening 9. When the displacement section 8 faces the opening 9 at a predetermined position and the probe portion 11 overlaps and rides onto the displacement section 8, the vertical movement of the shaft body 5a is converted into movement in a direction perpendicular to the centerline C (i.e., the c1 direction, radial to the centerline C). The displacement section 8 is tapered, and the probe portion 11 is used to detect the presence of the opening 9.

The movement of the probe portion 11 is transmitted to the front end portion 17a of the core 17 of the autonomous power generation device 1. The autonomous power generation device 1 converts the kinetic energy of the probe portion 11 into electrical energy and supplies power to the wireless module 101 to drive it. The wireless module 101 transmits, via wireless communication, a signal indicating that the probe portion has ridden onto the displacement section.

The rear end portion 17c of the core 17 of the autonomous power generation device 1 is in contact with an elastic member 18, which is a compression spring, on the rear side. The elastic member 18 is housed within a spring chamber 24, and when the core 17 moves in the core axis direction c1, elastic force is accumulated within the spring chamber 24. The elastic force stored in the elastic member is utilized as a force to push the core forward when the shaft body 5a descends and the probe portion 11 disengages from the displacement section 8.

According to the cylinder device 40, the condition under which the autonomous power generation device 1 generates power can be defined by the position of the displacement section 8 provided at an intermediate height of the shaft body 5a. In the cylinder device 40, when it rides over the displacement section 8, the vertical movement of the shaft body 5a is converted into movement in a direction perpendicular to the centerline C (direction c1, i.e., the radial direction of the centerline C). As a result, when the piston section 5b reaches its raised position, the autonomous power generation device 1 can operate the wireless module 101 and transmit information externally via a wireless signal.

When the probe section 11 rides onto the displacement section 8 or descends from the displacement section 8, a change in magnetic flux occurs in the core 17 of the autonomous power generation device 1 in either case. However, the direction of the magnetic flux differs, resulting in a difference in the polarity of the generated voltage. Therefore, the wireless module 101 may transmit different signals wirelessly based on the polarity of the voltage, thereby notifying an external device of the direction in which the change has occurred. Alternatively, the wireless module 101 may transmit the same signal wirelessly regardless of the polarity of the generated voltage. In this case, since the wireless signal from the wireless module 101 alone cannot distinguish the state, the determination of whether the cylinder device 40 is in the release position or the lock position is made based on whether the cylinder device 40 was in the process of moving to the release position or in the process of moving to the lock position.

In addition, although the autonomous power generation device 1 uses the urging force of the elastic member 18 to push the core 17 forward, the urging force may be replaced with pressure such as hydraulic fluid or compressed air. FIG. 6B illustrates this variation. The spring chamber 24, in which the elastic member 18 is mounted, is replaced with an operation chamber 25 to which hydraulic fluid or compressed air is supplied, and the rear end portion 17c is replaced with a piston 27. The pressure of hydraulic fluid or compressed air supplied to the operation chamber moves the piston 27 forward in the core axis direction c1, thereby pushing the core body 17b. In this case, hydraulic fluid or compressed air supplied to the operation chamber 25 may be communicated and supplied via a flow path 26 from a chamber 3a located above the piston portion 5b within the cylinder hole 3. Accordingly, when hydraulic fluid or compressed air is supplied to the chamber 3a, it is also supplied to the operation chamber 25 through the flow path 26. Thus, at the desired timing for operating the core body 17b in the forward direction along the core axis direction c1, hydraulic fluid or compressed air is supplied to the operation chamber 25, enabling precise operation of the core body 17b.

### [The Second Embodiment: Cylinder Device 50]

In the cylinder device 40, the autonomous power generation device 1 operates when the shaft member 5 is in the raised position. In contrast, in the cylinder device 50, the autonomous power generation device 1 operates when the shaft member 5 is in the lowered position.

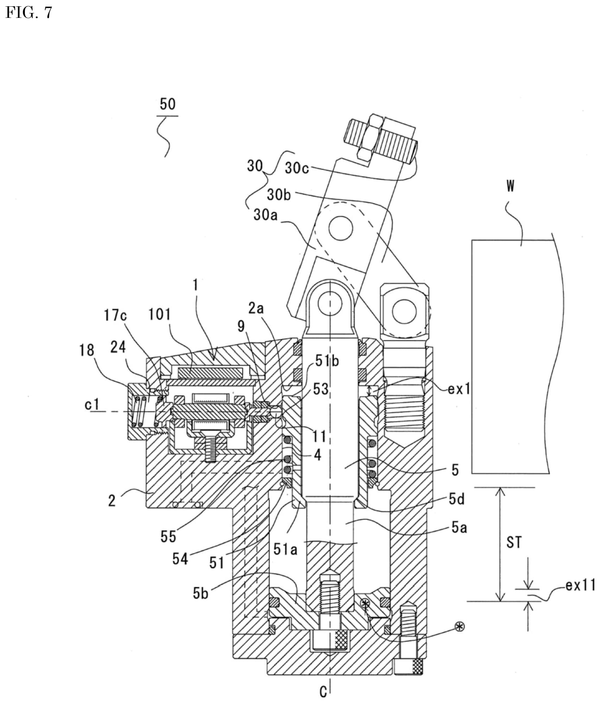

In FIG. 7, components identical to those of the cylinder device 40 shown in FIG. 6A are denoted by the same reference numerals, and detailed descriptions thereof are omitted. In the figure, the stroke range of the shaft member 5 is indicated by "ST," which represents the vertical movement range of the shaft member 5 marked with an asterisk (*). The cylinder device 50 includes, at the tip of the shaft member 5, a link clamp mechanism 30 composed of links 30a and 30b, which is capable of clamping a workpiece W at an operation point 30c.

The shaft member 5 includes, in order from the upper side, a shaft body 5a and a piston portion 5b having a larger diameter than the shaft body 5a. A stepped portion 5d is provided along the length of the shaft body 5a, and the diameter of the shaft body 5a above the stepped portion 5d is larger than that below it.

A sleeve 51 is fitted over the outer periphery of the shaft body 5a above the stepped portion 5d. The sleeve 51 is surrounded by the cylindrical hole 4. The lower end 51a of the sleeve 51 is reduced in diameter and engages with the stepped portion 5d. The upper end 51b of the sleeve 51 has its range of movement restricted by the ceiling portion 2a of the housing 2. That is, even if the shaft body 5a moves upward, once the upper end 51b of the sleeve 51 comes into contact with the ceiling portion 2a of the housing 2, the sleeve 51 can no longer move upward, and only the shaft body 5a continues to rise.

A displacement portion 53 is provided on the outer periphery of the sleeve 51 at an intermediate height. An opening 9 is formed within the range of movement of the displacement portion 53. A probe section 11, which protrudes from the opening 9, detects the displacement portion 53. When the opening 9 faces the displacement portion 53 and the probe section 11 overlaps with the displacement portion 53, the vertical movement of the shaft body 5a is converted into movement in the direction perpendicular to the centerline C (i.e., the c1 direction, which is the radial direction of the centerline C). The sleeve 51 is urged upward by an elastic member 55, which has a fixed end 54 provided on the housing 2 side as its base.

In FIG. 7, the cylinder device 50 is shown with the piston portion 5b in a lowered position, and the link clamp mechanism 30 is in a state where the workpiece W has been released. The stepped portion 5d of the shaft body 5a pushes down the sleeve 51, illustrating the state immediately after the probe section 11 has disengaged from the recessed displacement portion 43. That is, it shows the state immediately after the autonomous power generation device 1 has operated the wireless module 101 to transmit a wireless signal externally.

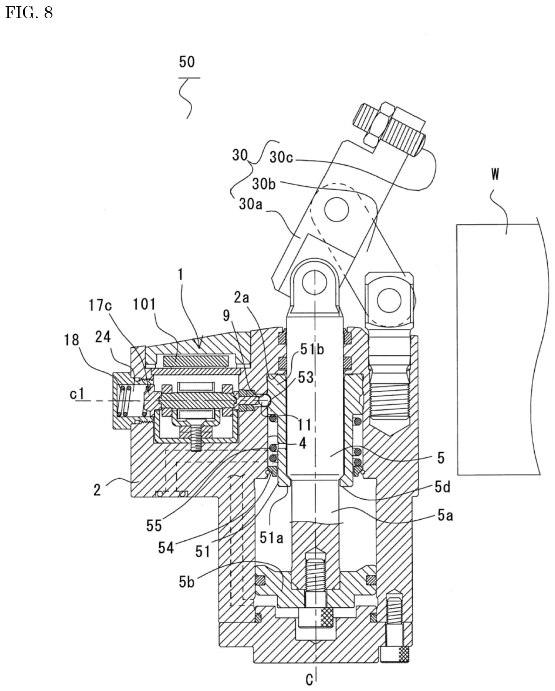

FIG. 8 illustrates the cylinder device 50 in a transitional state-either during the switch from the release state to the lock state, or from the lock state to the release state. The sleeve 51 is pushed upward by the elastic member 32, and the probe section 11 has dropped into the displacement portion 53. At the moment when the probe section 11 overlaps with the displacement portion 53, the autonomous power generation device 1 can operate the wireless module 101 to transmit a wireless signal externally.

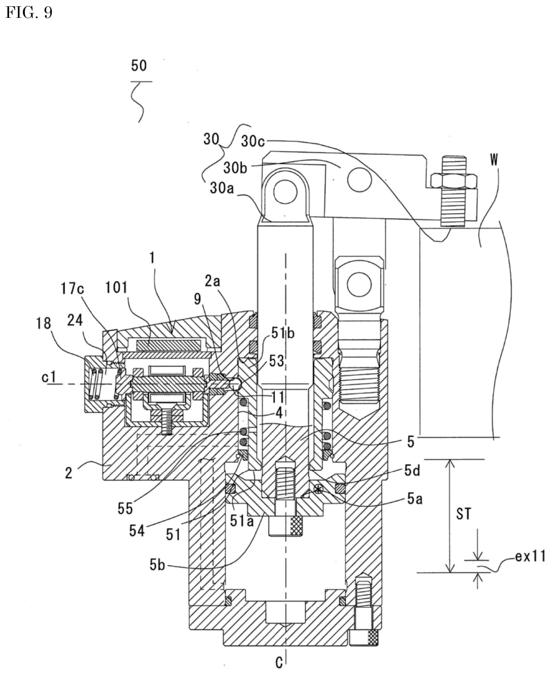

FIG. 9 illustrates the cylinder device 50 in the locked state. In this state, the sleeve 51 is unable to rise, and only the shaft body 5a has moved upward. The probe section 11 has dropped into the displacement portion 53. Accordingly, the range in which the sleeve 51 engages with the stepped portion 5d and descends in conjunction therewith corresponds to a lower first range ex11 within the overall stroke range ST of the shaft member 5. This range corresponds to the distance ex1 between the upper end 51b of the sleeve 51 and the ceiling portion 2a, as shown in FIG. 7.

According to the cylinder device 50, when the probe section 11 within the opening 9 overlaps with the displacement portion 53, the vertical movement of the shaft body 5a is converted into movement in the direction perpendicular to the centerline C (i.e., the c1 direction, which is the radial direction of the centerline C). As a result, when the piston portion 5b is in the lowered position, the autonomous power generation device 1 can operate the wireless module 101 to transmit a wireless signal externally.

### [The Third Embodiment: Cylinder Device 60]

The cylinder device 60 is a cylinder device used for pressure detection purposes. Components identical to those of the cylinder device 40 shown in FIG. 6 are denoted by the same reference numerals, and detailed descriptions thereof are omitted. The cylinder device 60 includes a safety valve 61, adjustment screws 64a and 64b, and a spring seat 62. The spring seat 62 defines the position of the other end of the elastic member 18. The cylinder hole 3 is in communication with a flow path P through which the fluid to be pressure-detected flows.

A hole-shaped displacement portion 68 is provided at an intermediate height of the shaft body 5a. Meanwhile, an opening 9 perpendicular to the centerline C is formed in the peripheral wall of the cylindrical hole 4. When the probe section 11, which protrudes from the opening 9, overlaps with the displacement portion 68, the vertical movement of the shaft body 5a is converted into movement in the direction perpendicular to the centerline C (i.e., the c1 direction, which is the radial direction of the centerline C).

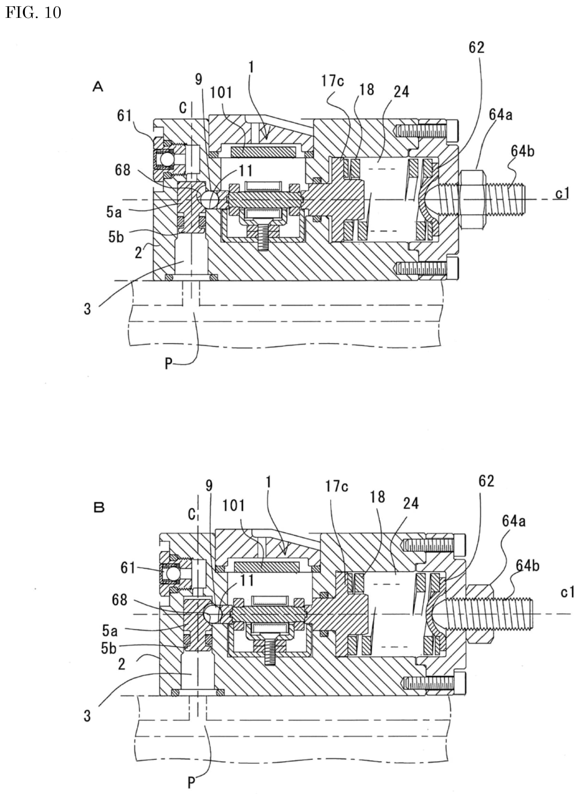

The urging force of the elastic member 18 can be adjusted by the adjustment screws 64a and 64b, and the spring seat 62. The piston portion 5b receives pressure from the fluid within the flow path P; however, even if it attempts to move upward, it cannot push the probe section 11 to the right in the core axis direction c1 unless the fluid pressure exceeds the urging force of the elastic member 18 (see FIG. 10A). On the other hand, when the fluid pressure within the flow path P exceeds the urging force of the elastic member 18, the probe section 11 can be pushed to the right in the core axis direction c1 (see FIG. 10B). At this moment, the autonomous power generation device 1 can operate the wireless module 101 to transmit a wireless signal externally, indicating that the specified pressure has been exceeded.

### [The Fourth Embodiment: Cylinder Device 70]

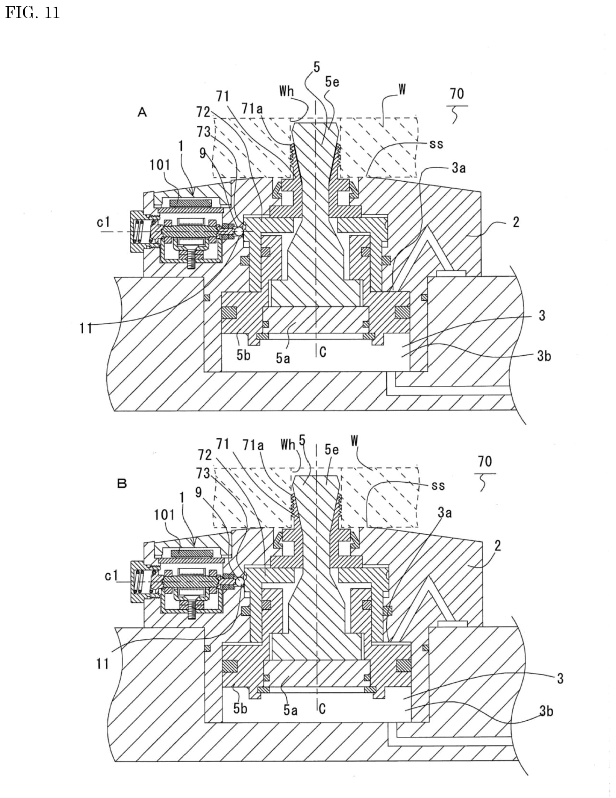

The cylinder device 70 is a cylinder device used for clamping applications. In FIG. 11, components identical to those of the cylinder device 40 shown in FIG. 6 are denoted by the same reference numerals, and detailed descriptions thereof are omitted. The cylinder device 70 includes a grip member 71 that engages with a hole Wh formed in the workpiece W, and a tapered shaft portion 5e inserted into the grip member 71. The tapered shaft portion 5e is a part of the shaft member 5, which, like in the cylinder devices 40, 50, and 60, includes a shaft body 5a and a piston portion 5b. The shaft body 5a, piston portion 5b, and tapered shaft portion 5e of the shaft member 5 move vertically as a single unit. The lower end of the grip member 71 is in contact with a sleeve 72 that surrounds the shaft member 5. The sleeve 72 is enclosed by the cylindrical hole 4. When the grip member 71 moves downward, the sleeve 72 also moves downward; conversely, when the sleeve 72 moves upward, the grip member 71 also moves upward.

When hydraulic fluid or compressed air is supplied to the upper chamber 3a of the cylinder hole 3, the piston portion 5b descends, causing the sleeve 72 to rise. When hydraulic fluid or compressed air is supplied to the lower chamber 3b of the cylinder hole 3, the piston portion 5b ascends. By lowering the piston portion 5b and drawing the shaft member 5 toward the seating surface ss, the tapered shaft portion 5e expands the grip claws 71a to engage with the inner circumferential surface of the hole Wh. Subsequently, by further drawing the grip member 71 toward the seating surface ss, the workpiece W is fixed in place. At this time, if the engagement of the grip member 71 with the hole Wh is properly achieved, the grip member 71 will not descend in conjunction with the drawing motion. Even if the grip member 71 descends slightly, it will be pushed back up by the piston portion 5b and return to its original position when the release state is initiated.

FIG. 11A shows the state before the grip member 71 is drawn in, while FIG. 11B shows the state in which the grip member 71 has been drawn in and the workpiece W is clamped. Hydraulic fluid or compressed air is supplied to the upper chamber 3a, causing the piston portion 5b to descend and the chamber 3a to expand.

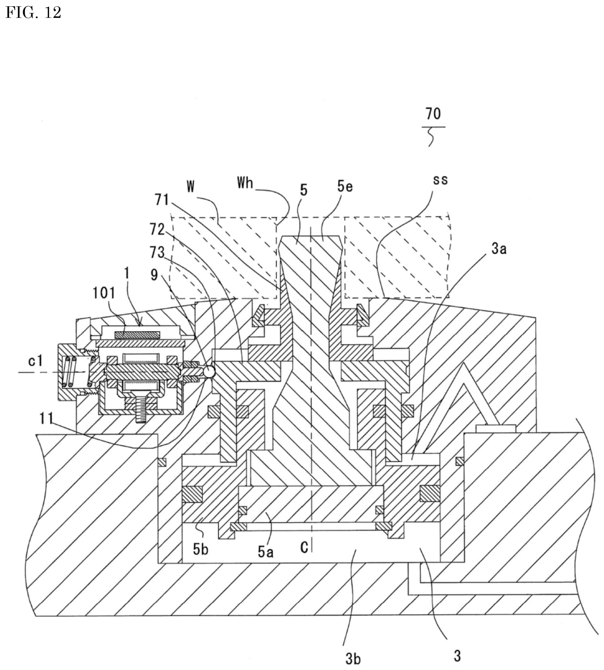

FIG. 12 illustrates a slip condition in which an attempt to clamp the workpiece W has failed. Such a slip condition may occur when the hole Wh in the workpiece W is larger than expected, or when the grip claws 71a are damaged. In this case, the grip member 71 fails to engage with the hole Wh and slips, causing the piston portion 5b to descend more than anticipated.

A recessed displacement portion 73 is provided on the outer periphery of the sleeve 72 at an intermediate height. An opening 9 is formed within the range of movement of the displacement portion 73. When the probe section 11 within the opening 9 overlaps with the displacement portion 73, the vertical movement of the shaft body 5a is converted into movement in the direction perpendicular to the centerline C (i.e., the c1 direction, which is the radial direction of the centerline C).

Since the grip member 71 is not engaged with the hole Wh, the grip member 71 and the sleeve 72 descend in conjunction with the descent of the piston portion 5b. When the probe section 11 descends to a position where it overlaps with the displacement portion 73, the autonomous power generation device 1 can operate the wireless module 101 to transmit a wireless signal externally, indicating that a grip failure has occurred.

It should be noted that, in the above-described grip member 71, the expansion of the grip claws 71a by the tapered shaft portion 5e was achieved through elastic deformation. However, the grip claws 71a may alternatively be configured as a mechanism capable of lateral movement.

### [The Fifth Embodiment: Cylinder Device 80]

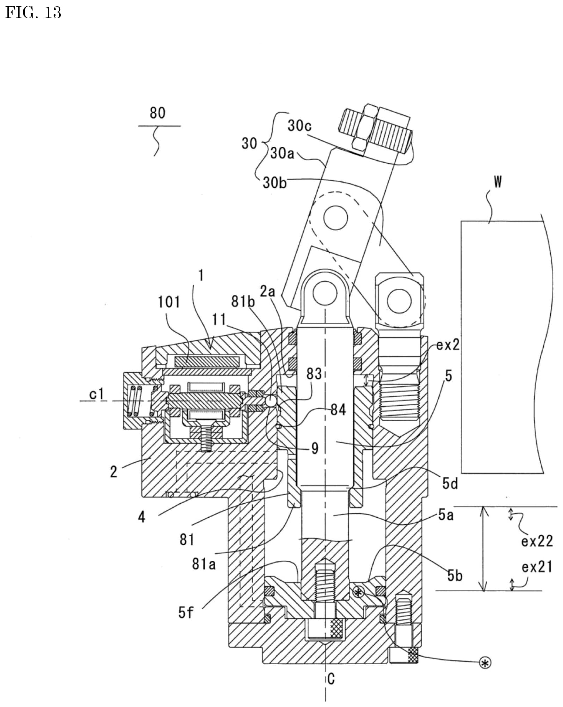

The cylinder device 80 is configured to allow a single autonomous power generation device 1 to detect two distinct positions. In FIG. 13, components identical to those of the cylinder device 40 shown in FIG. 6 are denoted by the same reference numerals, and detailed descriptions thereof are omitted. The cylinder device 80 includes a link clamp mechanism 30 composed of links 30a and 30b, which can clamp the workpiece W at an operation point 30c. In the figure, the stroke range of the shaft member 5 is indicated by the range ST, which represents the vertical movement range of the shaft member 5 marked with an asterisk (*) in the drawing.

The shaft member 5 includes, in order from the upper side, a shaft body 5a and a piston portion 5b having a larger diameter than the shaft body 5a. A stepped portion 5d is provided along the length of the shaft body 5a, with the diameter of the shaft body 5a above the stepped portion 5d being larger than that below it. A sleeve 81 is fitted over the outer periphery of the shaft body 5a, and the cylindrical hole 4 surrounds the sleeve 81. The lower end 81a of the sleeve 81 is reduced in diameter and is configured to catch on the stepped portion 5d. The upper end 81b of the sleeve 81 has its range of movement restricted by the ceiling portion 2a of the housing 2. That is, when the lower end 81a is caught on the stepped portion 5d and the shaft body 5a moves upward, the sleeve 81 cannot move upward any further once its upper end 81b comes into contact with the ceiling portion 2a, and only the shaft body 5a continues to rise.

A braking member 84 is attached to the outer periphery of the sleeve 81. The braking member 84 applies resistance to the vertical movement of the sleeve 81 by elastic force, and may be implemented, for example, using an O-ring or a rectangular rubber element. The shaft member 5 is further provided with a stepped portion 5f below the stepped portion 5d. The stepped portion 5f also serves as the upper surface of the piston portion 5b. The lower end 81a of the sleeve 81 comes into contact with the stepped portion 5f as the piston portion 5b ascends. When the lower end 81a of the sleeve 81 is caught on the stepped portion 5d, the sleeve 81 rises in accordance with the upward movement of the piston portion 5b, regardless of the braking force applied by the braking member 84.

A displacement portion 83 is provided on the outer periphery of the sleeve 81 at an intermediate height. An opening 9 is formed within the range of movement of the displacement portion 83. When the probe section 11 within the opening 9 drops into the displacement portion 83, the vertical movement of the shaft body 5a is converted into movement in the direction perpendicular to the centerline C (i.e., the c1 direction, which is the radial direction of the centerline C).

In FIG. 13, the cylinder device 80 is shown with the piston portion 5b in a lowered position, and the link clamp mechanism 30 is in a state where the workpiece W has been released. The stepped portion 5d of the shaft body 5a has pushed the sleeve 81 downward, and the probe section 11 has just disengaged from the displacement portion 83. That is, it represents the state immediately after the autonomous power generation device 1 has operated the wireless module 101 to transmit a wireless signal externally, indicating that the release position has been reached.

Thereafter, during the transitional state from the release position to the locked position, the braking member 84 applies resistance to the downward movement of the sleeve 81, thereby holding the sleeve 81 in the position shown in FIG. 13.

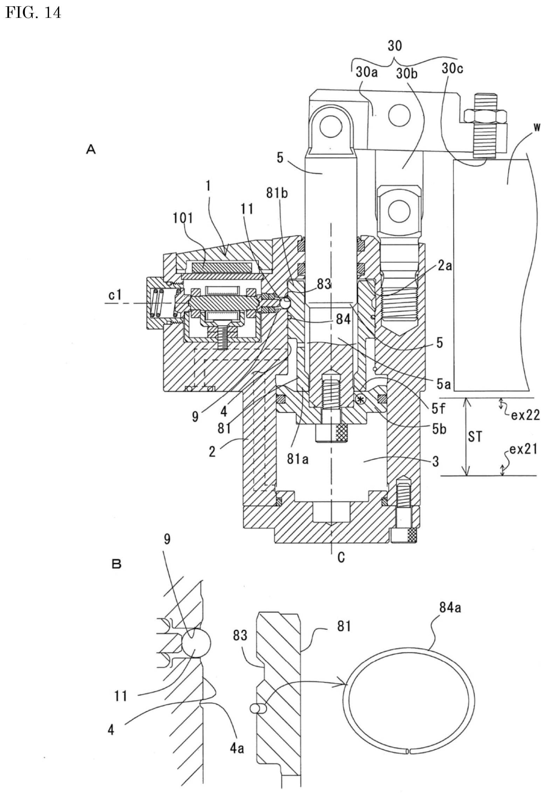

FIG. 14A shows the cylinder device 80 in the locked state. It illustrates the state immediately after the autonomous power generation device 1 has operated the wireless module 101 to transmit a wireless signal externally, indicating that the locked position has been reached. The lower end 81a of the sleeve 81 comes into contact with the stepped portion 5f, which forms the upper surface of the piston portion 5b, and the sleeve 81 rises despite the braking force applied by the braking member 84. This is the state immediately after the probe section 11 has overlapped with the displacement portion 83. From the state shown in FIG. 13 to the state shown in FIG. 14A, the sleeve 81 moves by a distance ex2 (see FIG. 13). When the lower end 81a of the sleeve 81 engages with the stepped portion 5f and the piston portion 5b rises by the distance ex2, the probe section 11 overlaps with the displacement portion 83. In FIG. 14A, within the stroke range ST of the shaft member 5, the second range in which the sleeve 81 moves while engaged with the stepped portion 5f is indicated as ex22. This corresponds to the final position of the upward stroke of the shaft member 5. Conversely, during the transition from the state in FIG. 14A back to the state in FIG. 13, the lower end 81a of the sleeve 81 engages with the stepped portion 5d and moves by the distance ex2. In FIG. 14A, the first range in which the sleeve 81 moves while engaged with the stepped portion 5d during the stroke range ST is indicated as ex21. This corresponds to the final position of the downward stroke of the shaft member 5.

According to the cylinder device 80, the probe section 11 within the opening 9 falls into the displacement portion 83, thereby converting the vertical movement of the shaft body 5a into movement in the direction perpendicular to the centerline C (i.e., the c1 direction, which is the radial direction of the centerline C). As a result, the autonomous power generation device 1 can operate the wireless module 101 to transmit a wireless signal externally both when the piston portion 5b is in the lowered position and in the raised position.

In the cylinder device 80, the probe section 11 disengages from the displacement portion 83 at the release position and falls into the displacement portion 83 at the locked position. However, the vertical position of the displacement portion 83 may be modified so that the relationship is reversed.

Alternatively, a retaining ring 84a made of spring steel may be used as the braking member 84. In this case, as shown in FIG. 14B, a small groove 4a is formed in the cylindrical hole 4, and the retaining ring 84a may engage with the groove by elastically expanding in diameter, thereby applying resistance to the vertical movement of the sleeve 81.

### [The Sixth Embodiment: Cylinder Device 90]

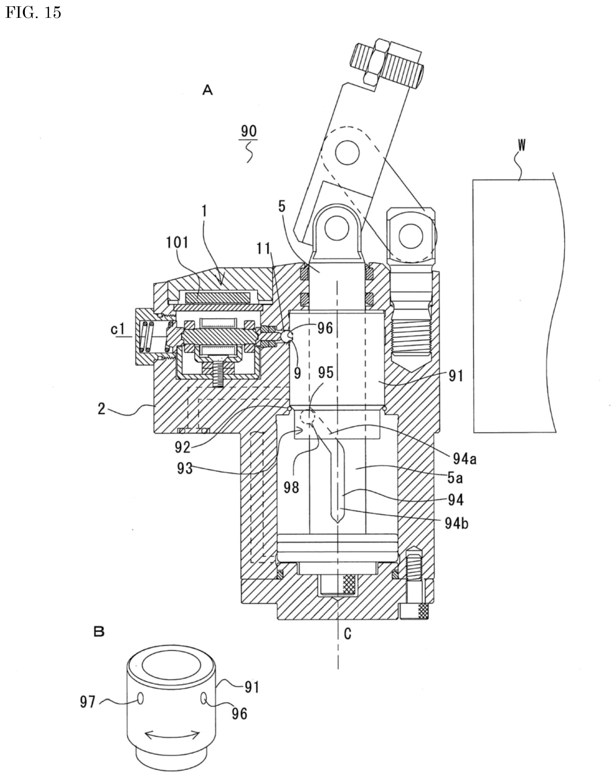

The cylinder device 90 is another example that enables a single autonomous power generation device 1 to detect two distinct positions. In FIG. 15, components identical to those of the cylinder device 40 shown in FIG. 6 are denoted by the same reference numerals, and detailed descriptions thereof are omitted.

In FIG. 15A, a sleeve 91 is fitted over the shaft body 5a. The cylindrical hole 4 surrounds the sleeve 91. The sleeve 91 is restricted in its vertical movement by a stop ring 92, but is capable of rotating about the shaft body 5a. A rotation mechanism 93 is provided between the shaft body 5a and the sleeve 91. The rotation mechanism 93 includes a guide groove 94 and a ball (engaging member) 95. The guide groove 94 is composed of a spiral rotation groove 94a and a linear groove 94b arranged upward in sequence. The ball 95 is inserted into the guide groove 94 and is rotatably supported in a support opening 98 formed in the inner wall of the sleeve 91. When the piston portion 5b moves between its uppermost and lowermost positions, the rotation mechanism 93 causes the sleeve 91 to rotate by 90 degrees.

In FIG. 15B, circular displacement portions 96 and 97, which overlap with the probe section 11, are provided on the same circumference of the outer periphery of the sleeve 91 at different angular positions (separated by 90 degrees) around the centerline C. The displacement portions 96 and 97 are holes with smaller diameters than the probe section 11, and are formed at the same height as the opening 9. When the probe section 11 within the opening 9 overlaps with either displacement portion 96 or 97, the vertical movement of the shaft body 5a is converted into movement in the direction perpendicular to the centerline C (i.e., the c1 direction, which is the radial direction of the centerline C).

FIG. 15A shows the cylinder device 90 in the release state. The piston portion 5b is at its lowermost position, and the probe section 11 overlaps with the displacement portion 96. When the probe section 11 overlaps with the displacement portion 96, the autonomous power generation device 1 operates the wireless module 101 to transmit a wireless signal externally, indicating that the release position has been reached.

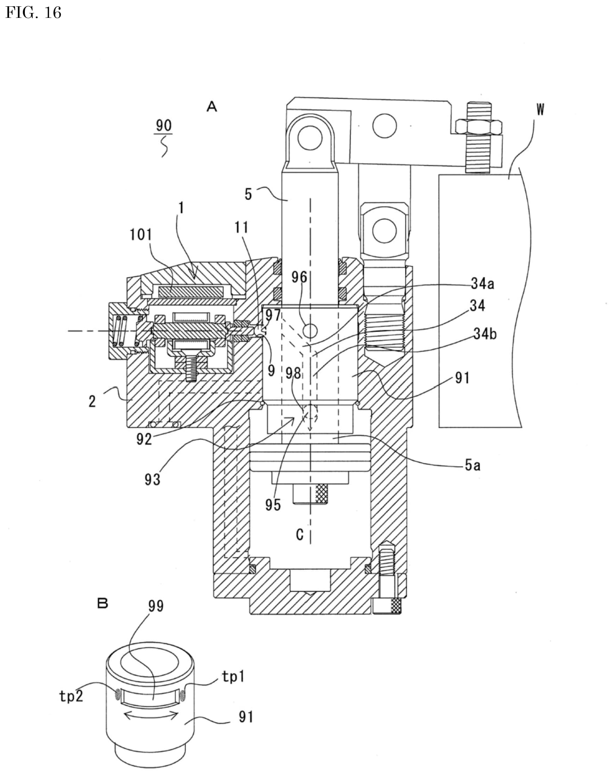

FIG. 16A shows the cylinder device 90 in the locked state. The piston portion 5b is at its uppermost position, and the probe section 11 overlaps with the displacement portion 97. When the probe section 11 overlaps with the displacement portion 97, the autonomous power generation device 1 operates the wireless module 101 to transmit a wireless signal externally, indicating that the locked position has been reached.

In the cylinder device 90, although a change in magnetic flux occurs in the core 17 of the autonomous power generation device 1, the direction of the magnetic flux remains the same, making it impossible to distinguish between positions based solely on the wireless signal from the wireless module 101. Therefore, it is necessary to determine whether the cylinder device 90 is at the release position or the locked position based on certain conditions, such as whether the device was in the process of moving toward the release position or toward the locked position. In this case, the controller can determine that the piston has reached the designated position by combining information from multiple sources-for example, by using the pressure increase signal from the lower chamber 3b together with the signal transmitted when the probe section 11 is inserted into the hole corresponding to the locked position, or by using the pressure increase signal from the upper chamber 3a together with the signal transmitted when the probe section 11 is inserted into the hole corresponding to the release position.

In the cylinder device 90, displacement portions 96 and 97 are provided on the outer periphery of the sleeve 91, but either displacement portion 96 or 97 may be provided individually. Alternatively, as shown in FIG. 16B, a groove 99 may be formed on the outer periphery of the sleeve 91, allowing the probe section 11 to ride onto the outer surface of the sleeve 91 at displacement portions located just before the release position tp1 and the locked position tp2, indicated in light shading. According to the cylinder device 90, a single autonomous power generation device 1 can be used to detect one or two positions. By adding additional displacement portions, it is also possible to detect further positions.

### [The Seventh Embodiment: Cylinder Device 110]

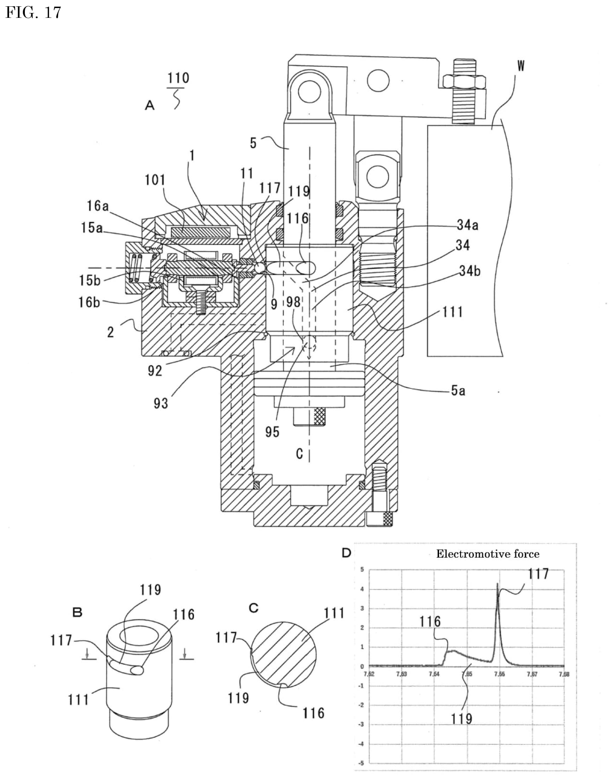

The cylinder device 110 is another example, based on a modification of the cylinder device 90, that enables a single autonomous power generation device 1 to detect two positions. In the cylinder device 110 shown in FIG. 17A, components identical to those of the cylinder device 90 in FIG. 16 are denoted by the same reference numerals, and detailed descriptions thereof are omitted. The sleeve 91 is replaced with a sleeve 111, which, like the sleeve 91, rotates 90 degrees by means of the rotation mechanism 93.

In FIGS. 17B and 17C, displacement portions 116 and 117 are provided on the same circumference of the sleeve 111 at different angular positions around the centerline C. The displacement portions 116 and 117 differ in their radial distances from the centerline C. In this example, the displacement portion 116 is located closer to the centerline C, while the displacement portion 117 is farther away. Between the displacement portions 116 and 117, a groove 119 is formed on the same circumference, having a radial distance from the centerline C that lies between those of the displacement portions 116 and 117. The depth of groove 119 is set such that the contact terminal 22 of the autonomous power generation device 1 is not affected by any of the pole pieces 15a, 15b, 16a, or 16b during movement.

FIG. 17D illustrates the electromotive force generated by the autonomous power generation device 1 as the probe section 11 moves from the displacement portion 116 to the displacement portion 117. When moving from the displacement portion 116 to the groove 119, the contact terminal 22 only undergoes a gradual change in distance corresponding to the rotation speed of the sleeve 111. Therefore, during this transitional movement, the generated electromotive force is insufficient to transmit a signal. However, near the end of the rotational movement of the sleeve 111, when the probe section 11 moves into the displacement portion 117, it is instantaneously displaced by the magnetic force of the pole pieces 15a and 16b, resulting in the generation of a large electromotive force.

When the sleeve 111 rotates in the reverse direction, the opposite phenomenon occurs. That is, while moving along the groove 119 after exiting the displacement portion 117, the generated electromotive force is insufficient to transmit a signal. However, near the end of the rotational movement of the sleeve 111, when the probe section 11 moves into the displacement portion 116, a large electromotive force is generated.

In each of the cylinder devices described above, the vertical movement of the shaft body 5a is converted into movement of the core body 17b along the core axis direction c1. Contact terminals are provided at both the front and rear of the core body 17b, and each contact terminal makes contact from one side to the other by linear motion between both end portions of U-shaped magnetic flux paths that overlap with a spacing therebetween. This configuration allows the direction of magnetic flux passing through the center of the coil in the coil unit to be reversed without magnetic flux leakage. Although the autonomous power generation device 1 is used in the examples above, it may be replaced with an alternative autonomous power generation device 1'.

### DESCRIPTION OF SYMBOLS

- 1, 1': Autonomous power generation device
- 2: Housing
- 2a: Ceiling portion
- 2b: Bottom portion
- 2c: Cylindrical wall
- 3: Cylinder hole
- 3a, 3b: Chamber
- 4: Cylindrical hole
- 4a: Groove
- 5: Shaft member
- 5a: Shaft body
- 5b: Piston portion
- 5c: Lower shaft
- 5d: Stepped portion
- 5e: Tapered shaft portion
- 6: Guide groove
- 7: Ball
- 8, 43, 53, 68, 73, 83, 96, 97, 116, 117: Displacement portion
- 9: Opening
- 11: Probe section
- 12: Coil unit
- 13: Magnet unit
- 14: Permanent magnet
- 15, 16: Magnetic flux path
- 15a, 15b, 16a, 16b: Pole piece
- 17: Core
- 17a: Front end
- 17b: Core body
- 17c: Rear end
- 17d, 17e: Sliding surface
- 18: Elastic member
- 19: Coil
- 19a: Bobbin
- 21, 22, 21' , 22': Contact terminal
- 21a, 21b, 22a, 22b: Contact surface
- 23: Bolt
- 24: Spring chamber
- 25: Working chamber
- 26: Flow path
- 27: Piston
- 30: Link clamp mechanism
- 30a, 30b: Link
- 30c: Point of action
- 31, 51, 72, 81, 91, 111: Sleeve
- 32, 55: Elastic member
- 34, 54: Fixed end
- 40, 50, 60, 70, 80, 90: Cylinder device
- 51a, 81a: Lower end
- 51b, 81b: Upper end
- 61: Safety valve
- 62: Spring seat
- 64a, 64b: Adjustment screw
- 71: Grip member
- 71a: Grip claw
- 84: Braking member
- 84a: Retaining ring
- 92: Stop ring
- 93: Rotation mechanism
- 94: Guide groove
- 94a: Spiral groove
- 94b: Linear groove
- 95: Ball (engaging member)
- 98: Support opening
- 99, 119: Groove
- 101: Wireless module
- 200: Test circuit
- C: Center line
- P: Path
- W: Workpiece
- Wh: Hole
- a: Projection
- b: Recess
- c1: Core axis direction
- d: Distance
- g: Gap
- p: Input terminal
- r: Base portion
- ss: Seating surface
- t: Spacing
- tp1: Release position
- tp2: Lock position
- v1: Movement speed
- x: Notch
- *ϕ* 1: Magnetic circuit
- *ϕ* 2: Magnetic circuit

## Claims

1. An autonomous power generation device comprising:
a coil unit in which a coil is wound around an outer periphery of a core having a core axis direction as its longitudinal direction, the coil unit having contact terminals respectively provided on front and rear sides of the outer periphery of the core across the coil;
a magnet unit including a pair of magnetic flux paths, each having a U-shaped configuration in a side view and formed of soft magnetic material, the magnetic flux paths being provided respectively for upper and lower magnetic poles of a permanent magnet, wherein one of the magnetic flux paths is disposed on an inner side and the other on an outer side with respect to the permanent magnet, such that the magnetic flux paths overlap with a spacing therebetween, and pole pieces at both ends of each magnetic flux path are arranged to face each other in pairs and are disposed on front and rear sides of the coil;
wherein the pair of pole pieces on the front side are arranged to sandwich the front contact terminal in the core axis direction, and the pair of pole pieces on the rear side are arranged to sandwich the rear contact terminal in the core axis direction;
wherein, when the core is in a first position on the front side, the front contact terminal is in contact with a front one of the front pair of pole pieces, and the rear contact terminal is in contact with a front one of the rear pair of pole pieces; and
wherein, when the core is in a second position on the rear side, the front contact terminal is in contact with a rear one of the front pair of pole pieces, and the rear contact terminal is in contact with a rear one of the rear pair of pole pieces.

2. An autonomous power generation device comprising:
a coil unit in which a coil is wound around an outer periphery of a core body having a core axis direction as its longitudinal direction, the coil unit including sliding surfaces respectively provided on front and rear portions of the outer periphery of the core body across the coil, each sliding surface extending a predetermined distance in the core axis direction, and front and rear slide pieces configured to slide along the respective sliding surfaces;
a magnet unit including a pair of magnetic flux paths, each having a U-shaped configuration in a side view and formed of soft magnetic material, the magnetic flux paths being provided respectively for upper and lower magnetic poles of a permanent magnet, wherein one of the magnetic flux paths is disposed on an inner side and the other on an outer side with respect to the permanent magnet, such that the magnetic flux paths overlap with a spacing therebetween, and pole pieces at both ends of each magnetic flux path are arranged to face each other in pairs and are disposed on front and rear sides of the coil;
wherein the pair of pole pieces on the front side are arranged to sandwich the front slide piece in the core axis direction, and the pair of pole pieces on the rear side are arranged to sandwich the rear slide piece in the core axis direction;
wherein, when the core body is in a first position on the front side, the front slide piece is in contact with a front one of the front pair of pole pieces, and the rear slide piece is in contact with a front one of the rear pair of pole pieces;
wherein, when the core body is in a second position on the rear side, the front slide piece is in contact with a rear one of the front pair of pole pieces, and the rear slide piece is in contact with a rear one of the rear pair of pole pieces; and
wherein, during movement of the core body from the first position to the second position, the two slide pieces move along the respective sliding surfaces by magnetic force from the pole pieces.

3. The autonomous power generation device according to claim 1, wherein an elastic member is disposed on a rear side of the core body, and wherein, during movement of the core body from the first position to the second position, an elastic force for moving the core body toward the front side is accumulated in the elastic member.

4. The autonomous power generation device according to claim 1, wherein the coil is fixed in position relative to the magnet unit, and wherein the core body is movable from the first position to the second position via a coil center of the coil.

5. A cylinder device comprising:
a piston portion configured to move in a vertical direction; a shaft body extending from the piston portion; a cylindrical hole surrounding the shaft body and having an opening formed at an intermediate height thereof; and an autonomous power generation device;
wherein the shaft body is provided with a displacement portion configured to face the opening at a predetermined position during vertical movement of the piston portion;
wherein the autonomous power generation device comprises: a coil unit in which a coil is wound around an outer periphery of a core having a core axis direction as its longitudinal direction, the coil unit having contact terminals respectively provided on front and rear sides of the outer periphery of the core across the coil; and a magnet unit including a pair of magnetic flux paths, each having a U-shaped configuration in a side view and formed of soft magnetic material, the magnetic flux paths being provided respectively for upper and lower magnetic poles of a permanent magnet, wherein one of the magnetic flux paths is disposed on an inner side and the other on an outer side with respect to the permanent magnet, such that the magnetic flux paths overlap with a spacing therebetween, and pole pieces at both ends of each magnetic flux path are arranged to face each other in pairs and are disposed on front and rear sides of the coil;
wherein the pair of pole pieces on the front side are arranged to sandwich the front contact terminal in the core axis direction, and the pair of pole pieces on the rear side are arranged to sandwich the rear contact terminal in the core axis direction;
wherein, when the core is in a first position on the front side, the front contact terminal is in contact with a front one of the front pair of pole pieces, and the rear contact terminal is in contact with a front one of the rear pair of pole pieces;
wherein, when the core is in a second position on the rear side, the front contact terminal is in contact with a rear one of the front pair of pole pieces, and the rear contact terminal is in contact with a rear one of the rear pair of pole pieces; and
wherein a probe portion of the core protruding from the opening overlaps with the displacement portion, thereby converting the vertical movement of the piston portion into movement in the core axis direction.

6. A cylinder device comprising:
a piston portion configured to move in a vertical direction; a shaft body extending from the piston portion; a sleeve surrounding the shaft body and biased in an upward direction; a cylindrical hole surrounding the sleeve and having an opening formed at an intermediate height thereof; and an autonomous power generation device;
wherein the sleeve is provided with a displacement portion configured to face the opening at a predetermined position during vertical movement of the piston portion, and is configured to engage with a stepped portion of the shaft body and move therewith only within a predetermined first range during downward movement of the shaft body;
wherein the autonomous power generation device comprises: a coil unit in which a coil is wound around an outer periphery of a core having a core axis direction as its longitudinal direction, the coil unit having contact terminals respectively provided on front and rear sides of the outer periphery of the core across the coil; and a magnet unit including a pair of magnetic flux paths, each having a U-shaped configuration in a side view and formed of soft magnetic material, the magnetic flux paths being provided respectively for upper and lower magnetic poles of a permanent magnet, wherein one of the magnetic flux paths is disposed on an inner side and the other on an outer side with respect to the permanent magnet, such that the magnetic flux paths overlap with a spacing therebetween, and pole pieces at both ends of each magnetic flux path are arranged to face each other in pairs and are disposed on front and rear sides of the coil;
wherein the pair of pole pieces on the front side are arranged to sandwich the front contact terminal in the core axis direction, and the pair of pole pieces on the rear side are arranged to sandwich the rear contact terminal in the core axis direction;
wherein, when the core is in a first position on the front side, the front contact terminal is in contact with a front one of the front pair of pole pieces, and the rear contact terminal is in contact with a front one of the rear pair of pole pieces;
wherein, when the core is in a second position on the rear side, the front contact terminal is in contact with a rear one of the front pair of pole pieces, and the rear contact terminal is in contact with a rear one of the rear pair of pole pieces; and
wherein a probe portion of the core protruding from the opening overlaps with the displacement portion, thereby converting vertical movement of the piston portion into movement in the core axis direction.

7. A cylinder device comprising:
a piston portion configured to move in a vertical direction; a shaft body extending from the piston portion; a sleeve surrounding the shaft body; a cylindrical hole surrounding the sleeve and having an opening formed at an intermediate height thereof; and an autonomous power generation device;
wherein the sleeve is provided with a displacement portion configured to face the opening at a predetermined position during vertical movement of the piston portion, wherein the sleeve is configured to engage with a first stepped portion of the shaft body and move therewith only within a final first range during downward movement of the shaft body, and to engage with a second stepped portion of the shaft body and move therewith only within a final second range during upward movement of the shaft body;
wherein the autonomous power generation device comprises: a coil unit in which a coil is wound around an outer periphery of a core having a core axis direction as its longitudinal direction, the coil unit having contact terminals respectively provided on front and rear sides of the outer periphery of the core across the coil; and a magnet unit including a pair of magnetic flux paths, each having a U-shaped configuration in a side view and formed of soft magnetic material, the magnetic flux paths being provided respectively for upper and lower magnetic poles of a permanent magnet, wherein one of the magnetic flux paths is disposed on an inner side and the other on an outer side with respect to the permanent magnet, such that the magnetic flux paths overlap with a spacing therebetween, and pole pieces at both ends of each magnetic flux path are arranged to face each other in pairs and are disposed on front and rear sides of the coil;
wherein the pair of pole pieces on the front side are arranged to sandwich the front contact terminal in the core axis direction, and the pair of pole pieces on the rear side are arranged to sandwich the rear contact terminal in the core axis direction;
wherein, when the core is in a first position on the front side, the front contact terminal is in contact with a front one of the front pair of pole pieces, and the rear contact terminal is in contact with a front one of the rear pair of pole pieces;
wherein, when the core is in a second position on the rear side, the front contact terminal is in contact with a rear one of the front pair of pole pieces, and the rear contact terminal is in contact with a rear one of the rear pair of pole pieces; and
wherein a probe portion of the core protruding from the opening overlaps with the displacement portion, thereby converting vertical movement of the piston portion into movement in the core axis direction.

8. A cylinder device comprising:
a piston portion configured to move in a vertical direction; a shaft body extending from the piston portion; a sleeve surrounding the shaft body; a cylindrical hole surrounding the sleeve and having an opening formed at an intermediate height thereof; and an autonomous power generation device;
wherein the sleeve is provided with one or more displacement portions arranged on a common circumference so as to face the opening, and the sleeve is configured to rotate during vertical movement of the shaft body;
wherein the autonomous power generation device comprises: a coil unit in which a coil is wound around an outer periphery of a core having a core axis direction as its longitudinal direction, the coil unit having contact terminals respectively provided on front and rear sides of the outer periphery of the core across the coil; and a magnet unit including a pair of magnetic flux paths, each having a U-shaped configuration in a side view and formed of soft magnetic material, the magnetic flux paths being provided respectively for upper and lower magnetic poles of a permanent magnet, wherein one of the magnetic flux paths is disposed on an inner side and the other on an outer side with respect to the permanent magnet, such that the magnetic flux paths overlap with a spacing therebetween, and pole pieces at both ends of each magnetic flux path are arranged to face each other in pairs and are disposed on front and rear sides of the coil;
wherein the pair of pole pieces on the front side are arranged to sandwich the front contact terminal in the core axis direction, and the pair of pole pieces on the rear side are arranged to sandwich the rear contact terminal in the core axis direction;
wherein, when the core is in a first position on the front side, the front contact terminal is in contact with a front one of the front pair of pole pieces, and the rear contact terminal is in contact with a front one of the rear pair of pole pieces; wherein, when the core is in a second position on the rear side, the front contact terminal is in contact with a rear one of the front pair of pole pieces, and the rear contact terminal is in contact with a rear one of the rear pair of pole pieces; and
wherein a probe portion of the core protruding from the opening overlaps with the displacement portion, thereby converting vertical movement of the piston portion into movement in the core axis direction.

9. The cylinder device according to any one of claims 5 to 8, wherein the coil unit includes sliding surfaces respectively provided on front and rear portions of an outer periphery of the core across the coil, each sliding surface extending a predetermined distance in the core axis direction, wherein the front and rear contact terminals are slidable along the respective sliding surfaces, and wherein, during movement of the core from the first position to the second position, the two contact terminals move along the sliding surfaces by magnetic force from the pole pieces.

10. A cylinder device comprising:
a piston portion configured to move in a vertical direction; a shaft body extending from the piston portion; a sleeve surrounding the shaft body; a cylindrical hole surrounding the sleeve and having an opening formed at an intermediate height thereof; and an autonomous power generation device;
wherein the sleeve is provided with two displacement portions having different radial distances from a center and arranged on a common circumference so as to face the opening, and a groove having an intermediate depth between the two displacement portions on the same circumference, and the sleeve is configured to rotate during vertical movement of the shaft body;
wherein the autonomous power generation device comprises: a coil unit in which a coil is wound around an outer periphery of a core having a core axis direction as its longitudinal direction, the coil unit having contact terminals respectively provided on front and rear sides of the outer periphery of the core across the coil, and sliding surfaces respectively provided on the front and rear portions of the outer periphery of the core across the coil, each extending a predetermined distance in the core axis direction, the front and rear contact terminals being slidable along the respective sliding surfaces; and a magnet unit including a pair of magnetic flux paths, each having a U-shaped configuration in a side view and formed of soft magnetic material, the magnetic flux paths being provided respectively for upper and lower magnetic poles of a permanent magnet, wherein one of the magnetic flux paths is disposed on an inner side and the other on an outer side with respect to the permanent magnet, such that the magnetic flux paths overlap with a spacing therebetween, and pole pieces at both ends of each magnetic flux path are arranged to face each other in pairs and are disposed on front and rear sides of the coil;
wherein the pair of pole pieces on the front side are arranged to sandwich the front contact terminal in the core axis direction, and the pair of pole pieces on the rear side are arranged to sandwich the rear contact terminal in the core axis direction;
wherein, when the core is in a first position on the front side, the front contact terminal is in contact with a front one of the front pair of pole pieces, and the rear contact terminal is in contact with a front one of the rear pair of pole pieces;
wherein, when the core is in a second position on the rear side, the front contact terminal is in contact with a rear one of the front pair of pole pieces, and the rear contact terminal is in contact with a rear one of the rear pair of pole pieces; and
wherein a probe portion of the core protruding from the opening overlaps with the displacement portion, thereby converting vertical movement of the piston portion into movement in the core axis direction, and during movement of the core from the first position to the second position, the two contact terminals move along the sliding surfaces by magnetic force from the pole pieces.
